(19) Europäisches Patentamt / European Patent Office / Office européen des brevets

(11) **EP 4 548 027 B1**

(12) **EUROPEAN PATENT SPECIFICATION**

(45) Date of publication and mention of the grant of the patent:
**26.11.2025 Bulletin 2025/48**

(21) Application number: **23757578.2**

(22) Date of filing: **14.08.2023**

(51) International Patent Classification (IPC):
**F27B 7/38** *(2006.01)*    **C04B 7/47** *(2006.01)*
**F27D 15/02** *(2006.01)*

(52) Cooperative Patent Classification (CPC):
**F27B 7/386; C04B 7/47; F27D 15/028**

(86) International application number:
**PCT/EP2023/072359**

(87) International publication number:
**WO 2024/038001 (22.02.2024 Gazette 2024/08)**

(54) **CALCINED CLAY COOLER**

KÜHLER FÜR KALZINIERTEN TON

REFROIDISSEUR D'ARGILE CALCINÉE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.08.2022 EP 22191273**

(43) Date of publication of application:
**07.05.2025 Bulletin 2025/19**

(73) Proprietor: **Alite GmbH**
**31535 Neustadt (DE)**

(72) Inventor: **HAMMERICH, Jörg**
**31535 Neustadt (DE)**

(74) Representative: **Lohr, Jöstingmeier & Partner**
**Patent- und Rechtsanwälte mbB**
**Junkersstraße 3**
**82178 Puchheim/München (DE)**

(56) References cited:
**DE-A1- 102016 007 221**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Field of the invention

The invention relates to the manufacture of pozzolanic or hydraulic materials for substitution of cement clinker, e.g., in Portland Cement manufacture. In more detail, the invention relates to a calcined clay cooler. The calcined clay cooler has an axis of rotation and at least one clay conduit. The clay conduit(s) may each have a clay conduit wall that encloses a clay conduit volume with an upstream clay inlet and a downstream clay outlet. The clay conduits are rotatably supported to rotate relative to the axis of rotation.

## Description of the related art

Cement clinker is an approved concrete component, but its production is associated with significant $CO_2$-emissions. To reduce the amount of released $CO_2$ per ton of concrete it has been suggested to replace at least a portion of the clinker by pozzolanic-like materials. Examples are natural pozzolan and fly ash. Further, latent hydraulic materials like ground granulated blast furnace slag have as well been suggested as a clinker replacing material. Unfortunately, the availability of these materials is limited and hence so called artificial pozzolans have been suggested. These artificial pozzolans can be manufactured by calcining clays, usually between 600°C and 800°C (see e.g., Rodrigo Fernandez, Fernando Martirena and Karen L. Scrivener: The origin of the pozzolanic activity of calcined clay minerals: A comparison between kaolinite, illite and montmorillonite; Cement and Concrete Research, Vol. 41, 2011, p113-122). Industrial scale experiments have as well been reported by Tobias Danner, Reactivity of Calcined Clays, PhD-Thesis 2013, Trondheim University (ISBN 978-82-471-4552-4). Presently, in industrial scale, the clays are heated ('calcined', see below) by a clay furnace and subsequently cooled by means of calcined clay coolers. Such calcined clay coolers are rotating drums with a spray cooled drum shell. Water as coolant is sprayed on the peripheral surface of the drum (Luiz Felipe de Pinho and Roberto Campos: Claying it all on the line; World Cement, 2021, Vol. 4, p. 35 -38, see last figures), while the calcined clay is transported in the rotating drum to the cooler outlet.

US patent 11,530,881B2 suggests a bulk material cooler with open transport tubes for transporting material to be cooled indirectly. The transport tubes are arranged about an axis of rotation and are each adapted to be filled jointly via a conical filling region with material to be cooled. Each transport tube is arranged concentrically within a respective cooling tube. The cooling tubes are connected to a single coolant tube via supply tubes which are arranged in a spoke-like manner, wherein the cooling medium is fed into the coolant tube and flows via the supply tubes into the cooling tubes.

These burnt clays are referred to as *"calcined clays"*, although *calcination* in its literal sense, being a thermal decomposition of $CaCO_3$-, does not take place. It is assumed that that the term "calcination" is used simply because of the analogy to the cement clinker process: Limestone is rendered hydraulic by heating it above the calcination temperature and clay is rendered pozzolanic by heating it. Both materials can so to speak be 'activated' for the purpose of being used in the concrete industry. In other words, the term *calcined clays* simply refers to a clay that has been subjected to a heat treatment for rendering the clay pozzolanic and/or hydraulic.

## Summary of the invention

The problem to be solved by the invention is to improve cooling of calcined clay being provided to the cooler from a clay furnace, e.g., from a rotary clay kiln.

Solutions to the problem are described in the independent claims. The dependent claims relate to further improvements of the invention.

The calcined clay cooler has an axis of rotation and at least one clay conduit. The at least one clay conduit is preferably supported to rotate around the axis of rotation and each of the at least one clay conduit(s) may have a separate conduit wall enclosing a separate conduit volume. The at least one conduit volume is accessible by an upstream clay inlet and a downstream clay outlet. In other words, the conduit volume has a clay inlet and a clay outlet, which may be defined by corresponding openings in the conduit wall. Although a single clay conduit may be sufficient, two or more clay conduits are preferred. Each of the at least one clay conduits is preferably rotatably supported to rotate relative to the same axis of rotation. Of course, the calcined clay cooler may as well comprise non-rotating components, e.g., a support base providing a rotational invariant surface (or a section thereof) supporting at least indirectly the at least one clay conduit. The at least one support base may rotatably support at least one roller, preferably at least two rollers. The at least one roller may support the at least one clay conduit, at least indirectly, for example via at least one support ring. For example, the at least one clay conduit may be attached to a support wheel. At least two support wheels may be attached to each other by a support shell. On the peripheral surface of the support shell may be a tire ring. The tire ring may be rotatably supported relative to the support based by the at least one roller, preferably by at least two rollers.

The at least one clay conduit may be a part of rotating portion of the calcined clay cooler. The rotating portion may be rotatably supported by static portion, wherein the term static only implies that not the entire static portion moves. Of course, the static portion may comprise, e.g., rollers or the like, which allow to rotatably support the rotating portion. A drive may be coupled to the rotating portion, e.g., via an optional transmission, to drive the rotating portion.

Preferably, each of the clay conduit walls comprises at least one coolant channel with a channel wall enclosing a channel volume and defining a channel inlet and a channel outlet. These coolant channels enable to effectively cool calcined clay being conveyed from the clay inlet to the clay outlet of the clay conduit, while reducing the coolant consumption and enabling to recuperate heat being removed from the calcined clay. The rotation of the clay conduit during said cooling enhances the thermal energy transfer from the calcined clay via the conduit wall to the coolant in the coolant channel. The coolant may be water or another fluid, wherein 'fluid' means that the coolant is in a fluid phase (i.e., in a liquid or gaseous phase) under the operating conditions (pressure and temperature) of the calcined clay cooler. The term fluid as well includes bulk materials, as these can be fluidized or flow similar to fluids if the slide-angle is exceeded.

Preferably, the calcined clay cooler has more than just a single clay conduit, e.g., two, three, four, five, six, seven, eight, nine or ten clay conduits. Theoretically, there is no limit for the number n of clay conduits, but if we have to define a maximum for formal and/or legal grounds one may consider that 800 or 1000 clay conduits are a maximum ($n \leq 1000$). The exact maximum depends on a number of factors. One factor is the diameter of the calcined clay cooler, another is the particle size of the hot clay to be cooled down, the tendency to agglomerate and as well the viscosity of the coolant. Generally, increasing the number of clay conduits increases the heat transfer surface separating the clay and the coolant and hence increases the heat transfer. On the other hand, increasing the number of conduits while maintaining the dimension of clay cooler essentially constant decreases the conduit diameter. The limit for increasing the number clay conduits is thus obtained if the free diameter of the clay conduit is so small that the burnt clay is not reliably transported by the clay conduit.

For a given total clay flow through the clay cooler, an increase of the number of clay conduits provides an increase of the surface via which a heat exchange may take place. Thus, the cooler can be dimensioned shorter (for a given calcined clay flow) while not significantly increasing the diameter of the trajectory being defined by the rotation of the clay conduit(s). Further, heat losses can be reduced (i.e., heat recuperation is improved) as well as the footprint of the calcined clay cooler. The latter is an important advantage when retrofitting existing plants. A preferred number n of conduits is in between four and eight ($4 \leq n \leq 8$). In this range, the conduits are still accessible from the inside by humans while the ratio of the peripheral surface to the volume of the clay conduits is reasonably high to promote a high heat transfer rate and a short length of the calcined clay cooler. Increasing the number n of conduits is possible and further enhances heat transfer from the calcined clay to the coolant, but has the disadvantage that manufacture, maintenance and inspection are more complicated.

The clay conduit(s) is (are) preferably arranged symmetrically with respect to the rotational axis. This symmetric arrangement minimizes static imbalances and homogenizes the torque required to rotate the rotating portion. Arranged symmetrically means in this context that in a preferred example a rotation of clay conduits around the rotational axis by $\frac{2\pi}{n} = \frac{360°}{n}$ maps the respective clay conduit onto its neighbored clay conduit, wherein n is the number of clay conduits, assuming the centers of the clay conduits have the same radial distance to the rotational axis. In practical realizations deviations from the preferred angle $\frac{2\pi}{n}$ can be expected. In case margins for these deviations have to be defined, we would suggest a margin of $\pm 30°$, $\pm 20°$, $\pm 15°$, $\pm 10°$, $\pm 5°$, $\pm 1°$, wherein smaller margins are preferred. In another example there exists for each first clay conduit at least one second clay conduit onto which it can be mapped by rotating the first clay conduit by $\frac{2\pi}{m+1}$, wherein m is the number of second clay conduits. If the number of second clay conduits is greater than 1 ($m \geq 2$) than another rotation by $\frac{2\pi}{m+1}$ maps the first clay conduit onto the position of another second clay conduit. This can be repeated until the first clay conduit is mapped onto its initial azimuthal position.

The calcined clay cooler further comprises an inlet section. The inlet section comprises an inlet duct with a duct inlet. Further, the inlet section comprises a number of duct outlets. Each of the duct outlets is in fluid communication with the duct inlet. The number of duct outlets preferably corresponds to the number clay conduits. For example, if the number of clay conduits is four, the inlet section may preferably have four duct outlets. Each of the duct outlets may be connected to the clay inlet of the corresponding clay conduit. For example, the first duct outlet may be connected to the first of the number of clay inlets, the second duct outlet may be connected to the second clay inlet and so forth. More generally, the $i^{th}$ duct outlet may be connected to the $i^{th}$ clay inlet, wherein i is an integer with $1 \leq i \leq$ n and $n$ is the number of clay conduits. In the example of $n = 2$ the inlet section may comprise a duct with a bifurcation connecting the duct inlet with each of the clay inlets. Or more generally the duct splits up into a number of n duct sections. As already apparent, in a preferred example, the inlet section is a separate duct that is in fluid communication with the clay inlets of the clay conduits. It may bi- or multifurcate or simply end as a single duct right in front of the clay inlets of the clay conduits. The inlet section and the clay conduits can be attached to each other at least indirectly, e.g. via the support shell, thereby ensuring that the inlet section rotates with the clay conduits. The inlet section allows to distribute hot calcined clay from a single outlet of a clay kiln to the number of $n$ clay conduits. Further, the inlet section provides for a homogenization of the material to be cooled (e.g. calcined clay), which results in an even distribution of the material to the clay inlets of the respective clay conduits.

The inner surface of the inlet section is preferably protected (and/or provided) by refractory. The inlet section is not necessarily actively cooled, but at least a portion of it may be in thermal contact with a coolant flow through an optional inlet section coolant channel.

A connection chute having a connection chute end extends into the duct inlet. A ring gap extends between the duct inlet and the chute end and may allow the inlet section to rotate relative to the connection chute. The ring gap is sealed by a gasket. In a preferred example, at least one fluid line may have at least one nozzle opening facing toward the ring gap and/or ending in the ring gap and/or in an enclosure of the ring gap. In other words, the nozzle opening is preferably configured to provide a fluid flow into the ring gap. In addition or alternatively, the pressure in the inlet section may optionally be below ambient pressure. Thereby fluid, e.g. air may be sucked into the clay conduit(s) via the inlet section and further enhance cooling of the calcined clay. Other example fluids can be steam and/or carbon dioxide ($CO_2$), nitrogen ($N_2$), as apparent, these are preferably provided to the ring gap via the at least one fluid line. Sealing the gap with a fluid and/or a gasket has the advantage that less hot gas being transported with the calcined clay escapes via the ring gap into the environment, which would result in an energy loss and as well in an unpleasant odor.

In addition or alternatively, the chute and/or an inlet section may comprise a water injection lance, allowing to treat the still hot calcined material with water and/or steam. For example, a lance may be attached to the chute and end in the inlet section or be elsewise configured to provide a fluid flow (e.g. a water and/or a steam flow) via at least one lance nozzle into the inlet section.

In a particularly preferred example, the coolant channel volume is limited by the clay conduit wall and by a channel wall. During operation, this measure provides for a direct heat exchange between a coolant flowing through the coolant channel and the conduit wall, being particularly efficient. Further, the amount of wall material can be reduced, as the conduit wall serves as well to delimit the coolant channel volume. In a preferred example, the channel wall encloses at least a portion of the conduit wall, preferably the entire conduit wall. In this case, in a cross-sectional view at least a portion of the channel wall may be considered as being a ring surrounding the conduit wall. Each of these measures allows to increase the heat transfer between the coolant and the conduit wall and thus between the calcined clay and the coolant. For a given calcined clay flow the footprint of the calcined clay cooler can be further reduced, while increasing the amount of heat being recuperated.

For example, the channel wall may support the conduit wall radially and/or anti-radially, while allowing the conduit wall to float in the axial direction. Thereby, stress due to different axial heat expansions of the channel wall and the conduit wall can be reduced.

As usual, "radially" implies that a vector is pointing away from the corresponding axis. Accordingly, "anti-radially" implies that a vector points towards the corresponding axis. This means that the start point and the end point of a radial vector as well as of an anti-radial vector differ only in their distance from the corresponding axis. The azimuthal coordinates and the axial coordinates are identical. Unless otherwise defined, the corresponding axis of a conduit is the conduit axis. In case of non-straight conduits, one may consider the cross sections and consider the center of the conduit in a cross section as starting point or end point of the radial or the anti-radial direction, respectively.

Preferably, the calcined clay cooler comprises at least one support profile with a first leg, a middle leg and a second leg. As implied by the term, the middle leg is in between of the first leg and second leg and defines an offset between the first leg and the second leg. The first leg may be attached to the peripheral surface of the conduit wall or to the inner surface of the channel wall. The second leg may hold the corresponding other wall in its radial position. For example, the second leg may have a plain bearing surface contacting the respective other of the peripheral surface of the conduit wall and an inner surface of the channel wall. Thus, if the first leg is (firmly) attached to the peripheral surface of the conduit wall the second leg's plain bearing surface may contact the inner surface of the channel wall. Alternatively, the first leg may be (firmly) attached to the inner surface of the channel wall and the second leg's plain bearing surface may contact the peripheral surface of the conduit wall. The middle leg may provide for a radial offset between the surface of the first leg being (firmly) attached and the plain bearing surface. Preferably, the calcined clay cooler comprises as least three of these support profiles per clay conduit, wherein these support profiles are preferably being distributed preferably at least essentially evenly with respect to the azimuthal direction (e.g., evenly within $\pm 45°$) to thereby define the position of the corresponding clay conduit in the radial direction. The middle leg of the support profile may be of an elastic material, e.g., steel or the like, and hence compensate for different radial thermal expansions (and contractions) of the conduit wall and the channel wall, while maintaining the two walls in their relative position to each other. In an example, the two walls can be maintained at least essentially concentric while still allowing for a compensation of axial stress, e.g., due different thermal expansions.

Only to provide an example, the first leg may be attached to the corresponding wall by welding, brazing, riveting, or gluing or may even be unitary with the wall to which it is attached.

Preferably, the calcined clay cooler comprises a coolant line, wherein the coolant line extends parallel to, preferably concentric with, or more generally along the rotational axis. The coolant line may comprise a connection port in the downstream half of the calcined clay cooler and is fluidly connected with the upstream end of the at least one coolant channel. The coolant line allows to locate rotary couplings in the colder end of the calcined clay cooler, thereby reducing the thermal stress. The construction can be cheaper and at the same time more durable and easier to service.

The recuperated exergy can be increased, and the required length of the calcined clay cooler can be minimized, by providing a counterflow of the coolant and the calcined clay. However, this may require very expensive materials in the upstream end of the conduits. This can be avoided by parallel flow of the coolant and the calcined clay. In a preferred example, the coolant channel(s) has (have) two sections, a first upstream section and a second downstream section, wherein upstream and downstream references to the flow direction of the calcined clay. In other words, the upstream section is closer the to the clay inlet than the downstream section of the coolant channel and the downstream section of the coolant channel is closer to the downstream clay outlet. First, the cold coolant is provided to the upstream section, to thereby maintain the conduit wall below a given temperature. In the upstream section(s) of the coolant channel(s) the coolant may flow parallel or antiparallel to the calcined clay in the clay conduit. From an end of the upstream section, the preheated coolant may be provided to the downstream end of the second section. From there the coolant may flow towards an upstream end of the second portion of the coolant channel(s), i.e., in a counterflow with the calcined clay in the corresponding duct. This configuration may keep the upstream portion of the conduit wall sufficiently cold, while still providing for an increase of the recuperated exergy. As already apparent, upstream and downstream reference herein only to the conveying direction of the calcined clay.

For example, the calcined clay cooler may comprise a coolant cooler with a hot coolant inlet and a cold coolant outlet, wherein the coolant channel inlet is connected with the cold coolant outlet and the channel outlet is connected with the hot coolant inlet. The coolant cooler may be a heat exchanger being configured to withdraw heat from the coolant and to provide this heat to a heat carrier, e.g., a heat carrier fluid. The coolant cooler allows to keep the use of coolant low by cooling it down. Further, the recuperated heat may be used as process heat, e.g., to dry or preheat the raw clay and/or to (pre-) heat a steam boiler and/or to drive an ORC-process (Organic Rankine Cycle process). In short, the cooler can contribute to reduce $CO_2$ emissions as well as to reduce operating costs. Generalizing the coolant cooler may comprise a cold heat carrier fluid inlet and a hot heat carrier fluid outlet. The hot heat carrier fluid outlet of the coolant cooler may preferably be connected to a heat inlet of a heat sink by a hot heat carrier fluid conduit. Similarly, the cold heat carrier fluid inlet of the coolant cooler may preferably be connected to a cold heat carrier fluid outlet of the heat sink via a cold heat carrier fluid conduit.

Examples of these heat sinks comprise, but are not limited to, raw meal dryers, boilers (e.g., steam boilers, ORC-boilers), district heating apparatus, combustion air preheaters, oxygen preheaters, chemical reactors, etc.

The coolant cooler may be omitted, as well: For example, the coolant may be air or another oxygen comprising fluid. The oxygen comprising fluid is heated up while passing the coolant channel and may subsequently be used as oxygen source for the calcined clay kiln or any other furnace or kiln to thereby increase efficiency of the corresponding plant. Only to avoid ambiguities, the calcined clay cooler may as well comprise a coolant cooler and at the same time an oxygen comprising fluid may be used as coolant. The oxygen comprising fluid may, but does not need to, be fed to a furnace or another reactor as oxygen source and the heat being transported by the oxygen comprising fluid can hence be used as process heat. In this example, at least one hot coolant line connects at least one coolant outlet of at least one coolant channel with a reactant inlet of a reactor for reacting at least a portion of the coolant. A vivid example for the reactor is a furnace, e.g., the clay furnace. In another example, a portion of the heated coolant may be cooled down in a coolant cooler and another portion may be provided to the furnace or another kind of reactor. In yet another example, at least a portion of the heated coolant may be cooled down in a coolant cooler and at least a portion of the cooled coolant may be provided from the coolant cooler's coolant outlet to the reactant inlet of the reactor (e.g., of the furnace). All these examples can be combined.

In a preferred example, one of the two connections is provided by the coolant line. For example, the cold coolant outlet may be connected with the at least one channel inlet via the coolant line. Alternatively, the hot coolant inlet may be connected with the at least one channel outlet via the coolant line.

If the calcined clay conduit comprises agitation means and/or conveying means extending from the inner side of the conduit wall into the conduit volume, cooling can be enhanced by mixing the calcined clay. Further, conveying of the calcined clay can be improved. For example, protrusions extending from the inner surface of the conduit wall into the conduit volume may agitate the calcined clay while the conduit rotates. By inclining a surface of the protrusion relative to the longitudinal direction of the conduit conveying may be controlled. For example, inclining the surface of the protrusion in the conveying direction may increase the flow of the calcined clay towards the clay outlet at a given rotational speed and horizontal orientation of the conduit, while inclining the surface of the protrusion against the direct conveying direction may reduce the average speed of the calcined clay towards the clay outlet. Both alternatives may be used to adapt the time the calcined clay is cooled in the cooler and hence the temperature it has at the clay outlet.

The calcined clay cooler may further comprise one (or more) support wheel(s) with at least one through hole. An example for a support wheel is a support disc, wherein the disc, different from its mathematical definition, shall imply a circular (preferably flat) structure with a finite thickness. The disc may have through holes or be reduced to spokes or the like.

The at least one channel wall and the at least one conduit wall may extend through the through-hole in the support wheel(s). At least the at least one channel wall may be radially supported by the support wheel. In a preferred example the calcined clay cooler has a number of support wheels. These are preferably spaced along the rotational axis. Each of the support wheels may contribute to maintain the conduit wall(s) and/or the channel wall(s) and/or the coolant line(s) in a predefined azimuthal position and in a predefined radial position relative to each other. In a simple example, the support wheel may be a disc with a number of through holes, wherein at least some of the through holes have rims that may support a conduit wall and/or a channel wall and/or the coolant line or any other part that extends along the rotational axis and shall rotate together with the clay conduit(s) around the rotational axis.

In case the calcined clay cooler comprises two or more support wheels a support wall may be attached to the at least two support wheels to enclose at least a portion of the rotating part of the calcined clay cooler. The support wall provides for additional stability, protects the coolant channel(s) and the clay conduit(s) from damage and enhances safety of workers present in the vicinity of the calcined clay cooler. Further, heat losses are further reduced.

The term connected implies a functional connection. For example, if an inlet of a first duct is connected to an outlet of a channel, the connection provides for a fluid communication. Each connection mentioned herein can be either a direct or an indirect connection. This means that "connected" can be replaced herein by "directly and/or indirectly connected". Two pieces are in contact if they touch each other. For example, two plain bearing surfaces being in contact to each other allow for a movement (e.g. a translation or a rotation) of the corresponding parts. The term attachment indicates a mechanical fixation. To pieces are attached to each other if one is affixed to the other.

## Description of Drawings

In the following the invention will be described by way of example, without limitation of the general inventive concept, on examples of embodiment with reference to the drawings.

Figure 1    shows a sketch of a calcined clay manufacturing line with a calcined clay cooler.
Figure 2    shows a side view of the rotating portion of the calcined clay cooler.
Figure 3    shows a partially sectioned view of the rotating portion of the calcined clay cooler.
Figure 4    shows a partially mounted rotating portion of the calcined clay cooler.
Figure 5    shows a cross sectional view of the cooler along section plane C-C in Figure 2.
Figure 6    shows a cross sectional view of the cooler along section plane B-B in Figure 2.
Figure 7    shows a detail of a calcined clay conduit in a sectional view.
Figure 8    shows another detail of a calcined clay conduit in a sectional view.

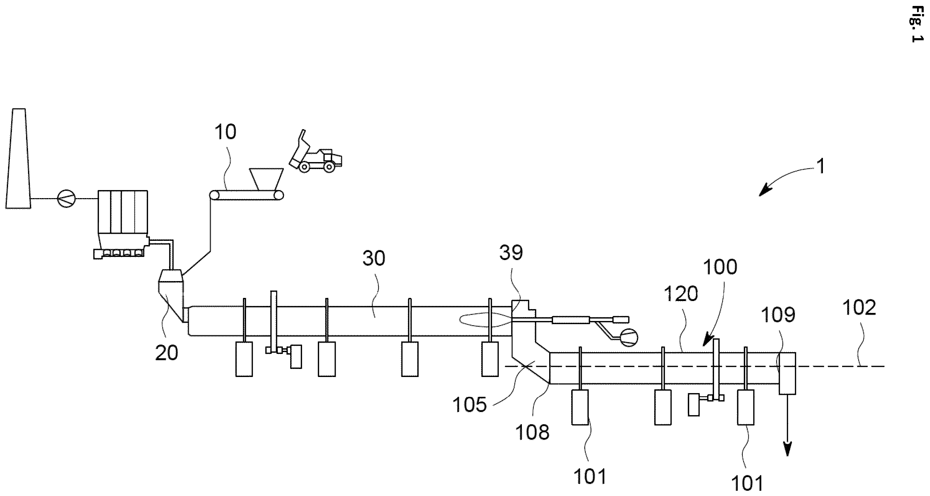

FIG. 1 shows a calcined clay manufacturing line. Clay is provided to a clay preprocessing station 10 e.g., by trucks or any other conveying means. In the preprocessing station 10 the clay maybe ground, blended and/or dried. From the clay preprocessing station 10 the preprocessed clay is provided via an optional preheater 20 to a heating device 30 (e.g., to a rotary kiln 30) for heating the clay up to a predefined temperature. The kiln outlet 39 (more generally the heating device's outlet) is connected to the upper end of a connection chute 105. Via the connection chute 105, calcined clay may be provided to an inlet section 110 of a calcined clay cooler 100. As can be seen, the optional inlet section 110 may comprise an inlet duct with a duct inlet. Further, the inlet section may comprise a number of duct outlets. In the depicted example, the inlet section is cylindric (at least essentially), although other shapes are possible as well. However, the depicted cylindric shape provides for an improved homogenization of the calcined clay being subsequently charged to clay conduits 160. This homogenization results in an improved heat recuperation and reduced power requirement for rotating the cooler. In addition, conditioning, e.g., with a water and/or steam lance in the inlet section is more efficient, as the dwell time is maximized.

In the calcined clay cooler 100, the calcined clay is cooled down while in turn a coolant is heated up. An example coolant may be water, but other coolants may be used as well. The heated coolant may be provided to a coolant cooler to cool the coolant down again and to thereby recuperate the heat previously withdrawn from the calcined clay. For example, this heat may be used for example in the preprocessing station 10, e.g., for drying the raw clay and/or in the preheater 20 and/or a power plant. As can be seen in Fig. 1, the calcined clay cooler 100 may have a static portion 101 rotatably supporting a rotating portion 120.

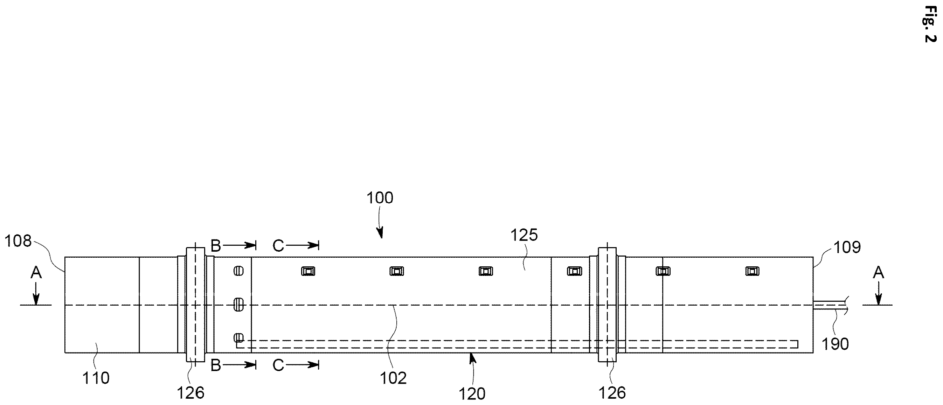

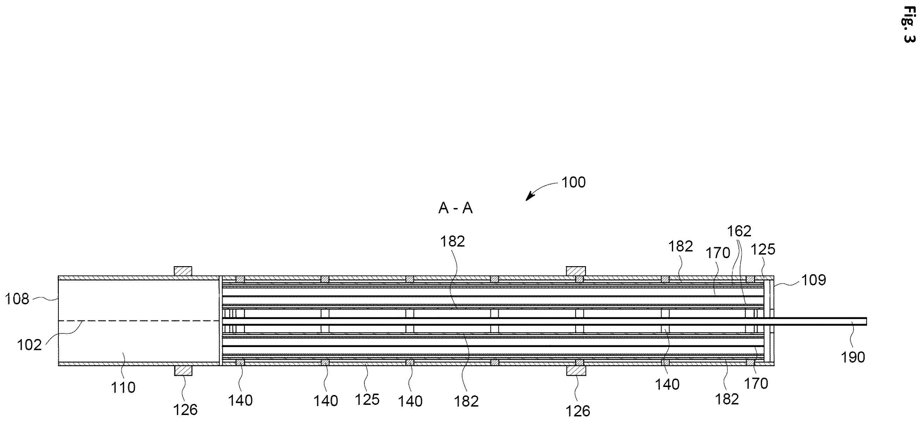

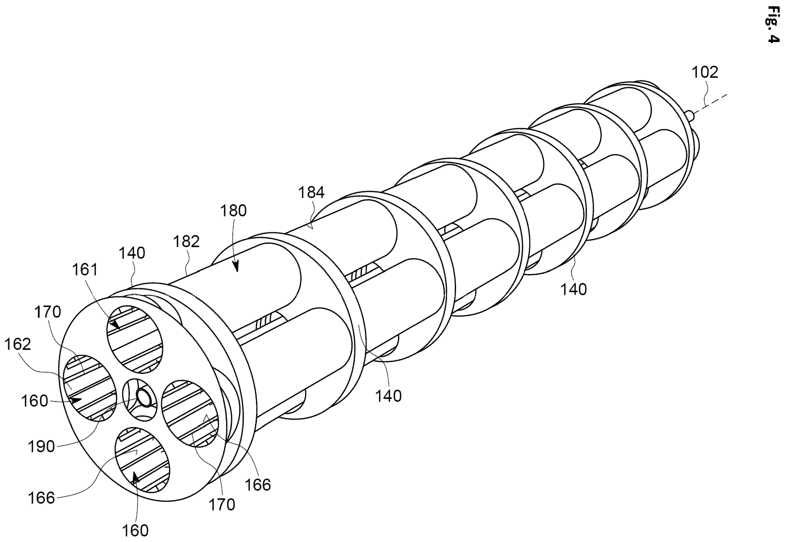

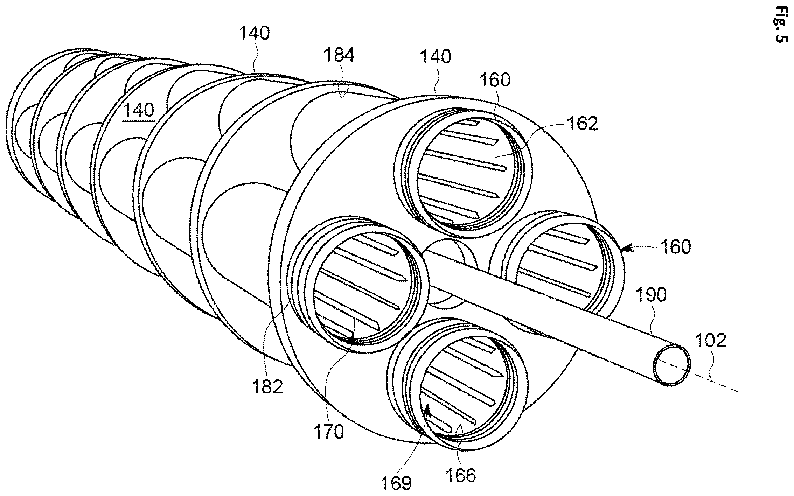

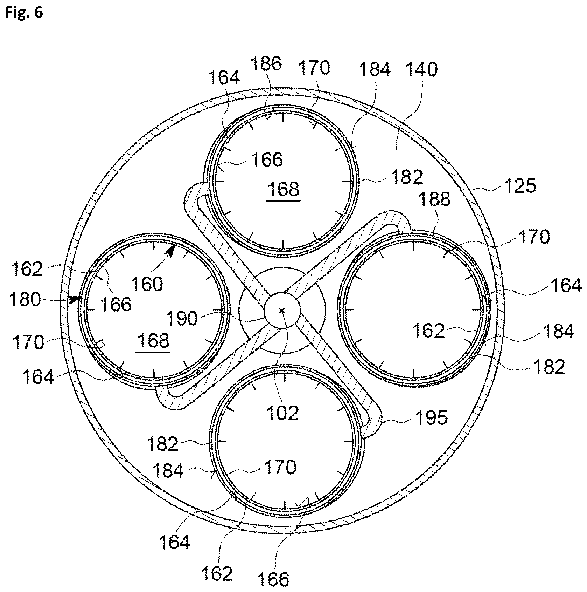

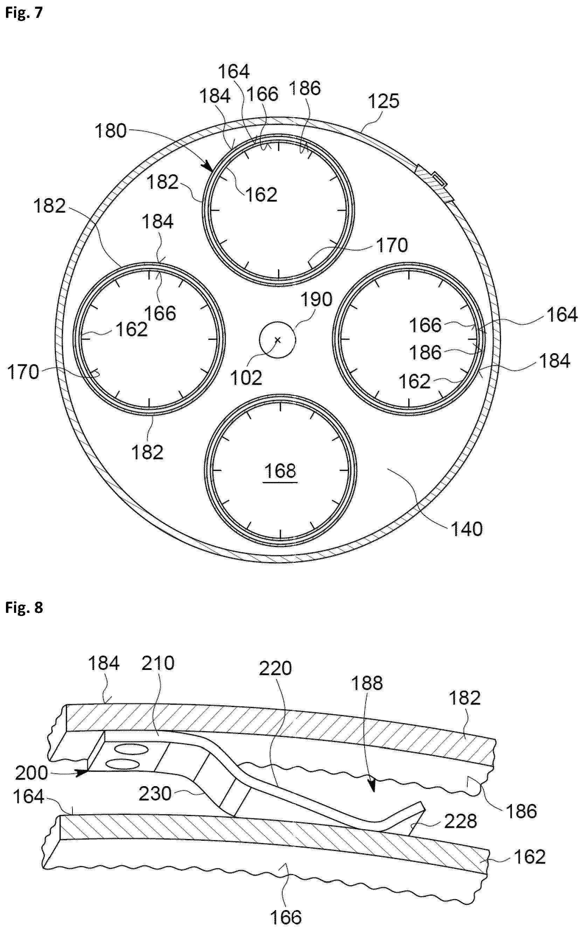

As can be seen in FIG. 2 and 3, the rotating portion 120 may have support walls 125. On the support wall 125 may be at least one support ring 126 with a rotationally invariant peripheral surface. These support rings 126 may as well be referred to as tire rings 126 or simply as tire 126. The tires 126 are for rotatably supporting the rotating portion 120, e.g., on rollers of the static portion 101. The rotational axis is indicated by reference numeral 102. Inside the support wall 125 are preferably a number of support wheels 140 being spaced along the longitudinal axis 102 (cf. FIG. 4). The number 126 may be only one (1) but may as well be bigger, depending on the size of the calcined clay cooler. The support wheels 140 may have through holes being delimited by rims, i.e., by a surface delimiting the corresponding through hole. These rims may support a number of n clay conduits 160 with a conduit wall 162 (shown are n = 4 clay conduits 160, but other numbers are possible as well). Each conduit wall 162 encloses a separate conduit volume 168 (see FIG. 6 and 7). As apparent from Fig. 3 to 7, the conduits 160 are arranged symmetrically with respect to the rotational axis 102. In the example, there are four conduits 160 (n = 4). The centers of the conduits 160 are spaced by $\frac{2\pi}{4} = \frac{\pi}{2} = 90°$, and hence a rotation of the conduits by $\frac{\pi}{2}$ maps the centers of a conduit on the center of the neighbored conduit. In the example, the conduits 160 have at least essentially the same shape and hence each rotation by $\frac{\pi}{2}$ maps the contours of the conduit walls 162 onto each other. At this point it is noted that the number n of conduits 160 is only an example and may be altered as set out above. In this case, the azimuthal offset between the centers of the conduits is preferably adapted accordingly. Again, it is noted, that in practice deviations from a perfect discrete rotationally symmetric azimuthal spacing of the conduits 160 may have to be accepted as indicated above. In the depicted example, the centers of the clay conduits 160 have the same radial distance to the rotational axis, but again, it is noted that this is only a preferred example. As apparent from figures 1 to 3, the inlet section 110 and the clay conduits 160 are preferably attached to each other, at least indirectly, for example via at least one of the support shell 125 and a support wheel 140. The attachment of the inlet section 110 to the clay conduits 160 ensuring that the inlet section rotates in phase with the clay conduits 160.

In the present example, each clay conduit 160 has a coolant channel 180 with a channel wall 182 surrounding the conduit wall 162 (see detail in FIG. 6 to 8). The space between the peripheral surface 164 of the conduit wall and the inner surface 186 of the channel wall 182 is a coolant channel volume 188 (see FIG. 8) through which the coolant may flow from a channel inlet to a channel outlet. Protrusions 170 may extend inwardly from the inner surface 164 of the conduit wall 162. In operation, the optional protrusions 170 improve the heat transfer from the hot calcined clay to the conduit wall 162 and at the same time agitate the calcined clay. In Fig. 3 only a single optional protrusion 170 per clay conduit is shown to declutter the figure. Any other number is possible as well.

As can be seen in FIGs. 1 to 7, a coolant line 190 may extend along the rotational axis 102 and may be connected for example by connection pipes 195 to coolant inlets of the coolant channels 180 (see FIG. 6). From there, the coolant may flow parallel to the effective conveying direction of the calcined clay to the downstream end 109 (see FIGs. 2 and 3) of the calcined clay cooler 100. From the downstream end 109 it may flow to a coolant cooler and after being cooled down, back into the coolant line 190.

FIG. 8 shows a detail of a clay conduit 160 with a conduit wall 162 being surrounded by a channel wall 182. Attached to an inner surface 186 of the channel wall 182 may be a first leg 210 of a profile 200. The optional profile 200 may comprise said first leg 210 and a second leg 220 with a middle leg 230 in between of the first leg 210 and the second leg 220. A plain bearing surface 228 of the second leg 220 may contact the peripheral surface 164 of the conduit wall 162 and hence support the conduit wall 162. The profile 200 may thus support the conduit wall radially, while providing a linear plain bearing enabling the conduit wall 162 and channel wall 182 to expand differently in the axial direction. In addition, the profile 200 by its elasticity may as well compensate for different radial expansions or contractions of the conduit wall 162 and channel wall 182, which may occur when ramping a calcined clay plant up or shutting the calcined clay plant down, respectively. The peripheral surface 164 of the conduit wall 162 may have at least one block attached to it that limit an axial movement of the plain bearing surface 228 e.g., in the azimuthal direction and/or in the axial direction. In another example, the first leg 210 may be attached to the peripheral surface 164 of the conduit wall 162 and the second leg's plain bearing surface may anti-radially support the channel wall 182. As shown in FIG. 8, the longitudinal extension of the first leg 210 and/or the of the second leg 220 may be essentially parallel to the azimuthal direction (with respect to the conduit axis). Alternatively, at least one of the first leg 210 and the second leg 220 may have a longitudinal direction being at least essentially parallel (including antiparallel) to the longitudinal axis and/or the rotational axis.

**List of reference numerals**

1       calcined clay plant
10      preprocessing station (optional)
20      preheater (optional)
30      calcined clay heater, e.g. rotary kiln (optional)
39      calcined clay heater outlet, e.g. rotary kiln outlet (optional)

100     calcined clay cooler
101     static portion (optional)
102     rotational axis
105     connection chute (optional)
108     upstream end of calcined clay cooler
109     downstream end of calcined clay cooler
110     inlet section (optional)
120     rotatably supported portion / rotating portion

125    support wall / support shell (optional)
126    support rings / tire rings / tires
140    support wheel (optional)
160    clay conduit
161    clay inlet of clay conduit
162    conduit wall
164    peripheral surface conduit wall
166    inner surface of conduit wall
168    conduit volume
169    clay outlet of clay conduit

170    protrusions / agitation means (optional)

180    coolant channel (optional)
182    channel wall (optional)
186    inner surface of channel wall
188    coolant channel volume
190    coolant line (optional)
195    connection pipe (optional)

200    support profile (optional)
210    first leg (optional)
220    second leg (optional)
228    plain bearing surface (optional)
230    middle leg (optional)

**Claims**

1.  A calcined clay cooler (100) with an axis of rotation (102), at least one clay conduit (160), an inlet section (110) and a connection chute (105) wherein

    - each of the at least one clay conduits (160) has a clay conduit wall (162),
    - each of the clay conduit walls (162) encloses a clay conduit volume (168),
    - each of the clay conduit volumes (168) has an upstream clay inlet (161) and a downstream clay outlet (169),
    - each of the at least one clay conduits (160) is rotatably supported to rotate relative to the axis of rotation (102),
    - the inlet section (110) comprises an inlet duct with a duct inlet and a number of duct outlets, wherein the number of duct outlets corresponds to the number of clay conduits and wherein the duct outlets are each connected to the clay inlet of the corresponding clay conduit
    - the connection chute (105) has a connection chute end,
    - the connection chute end extends into the inlet duct

    wherein

    each of the clay conduit walls (162) comprises at least one coolant channel (180) with a channel wall (182) enclosing a channel volume (188) and defining a channel inlet and a channel outlet, **characterized in that**,

    - a ring gap is defined between the connection chute and the inlet duct by the connection chute end extending into the inlet duct and **in that**
    - the ring gap is sealed by a gasket and/or at least one fluid line has at least one nozzle opening facing towards the ring rap and/or ending in the ring gap and/or in an enclosure of the ring gap.

2.  The calcined clay cooler (100) of claim 1, **characterized in that** the at least one clay conduit (160) is and/or comprises at least two clay conduits (160), being arranged symmetrically with respect to the rotational axis (102).

3.  The calcined clay cooler (100) of one of the previous claims, **characterized in that** the coolant channel volume (188) is limited by the clay conduit wall (162) and by the coolant channel wall (182), wherein the channel wall (182) encloses at least a portion of the clay conduit wall (162).

4.  The calcined clay cooler (100) of the previous claim, **characterized in that** the channel wall (182) supports the conduit wall (162) radially and anti-radially and floatingly in the axial direction.

5.  The calcined clay cooler (100) of one of the previous claims, **characterized in that** it further comprises at least one support profile (200) with a first leg (210), a middle leg (230) and a second leg (220), wherein

    - the middle leg (230) is in between of the first leg (210) and second leg (220) and defines an offset between the first leg (210) and the second leg (220),
    - the first leg (210) is attached to a peripheral surface (164) of the conduit wall (162) or to an inner surface (186) of the channel wall (182) and **in that** the second leg (220) has a plain bearing surface (228) contacting the respective other of the peripheral surface (164) of the conduit wall (162) or to an inner surface (186) of the channel wall (182), and
    - the offset is measured radially with respect a longitudinal axis of a conduit axis defined by the conduit wall (182).

6.  The calcined clay cooler (100) of the previous claim, **characterized in that** at least one of the at least one first legs (210) is attached by welding, brazing, riveting, gluing or is unitary with the wall (162, 182) to which it is attached.

7. The calcined clay cooler of one of the previous claims, **characterized in that** it further comprises a coolant line (190), wherein the coolant line (190) extends along the rotational axis (102) and/or has a connection port in the downstream half of the calcined clay cooler (100) and/or is fluidly connected with the upstream end of the at least one coolant channel (180).

8. The calcined clay cooler (100) of one of the previous claims, **characterized in that** the calcined clay cooler (100) comprises a coolant cooler with a hot coolant inlet and a cold coolant outlet, wherein the channel inlet is connected with the cold coolant outlet and the channel outlet is connected with the hot coolant inlet.

9. The calcined clay cooler (100) of the previous claim **characterized in that** the coolant cooler comprises a cold heat carrier fluid inlet and a hot heat carrier fluid outlet and **in that** the hot heat carrier fluid outlet of the coolant cooler is connected to a heat inlet of a heat sink by a hot heat carrier fluid conduit and **in that** the cold heat carrier fluid inlet of the coolant cooler is connected to a cold heat carrier fluid outlet of the heat sink via a cold heat carrier fluid conduit.

10. The calcined clay cooler (100) of claim 8 or 9, **characterized in that** the cold coolant outlet is connected with the at least one channel inlet via the coolant line (190) and/or **in that** the hot coolant inlet is connected with the at least one channel outlet via the coolant line (190).

11. The calcined clay cooler (100) of one of the previous claims, **characterized in that** the clay conduit (160) comprises agitation means and/or conveying means extending from the inner surface (166) of the conduit wall (162) into the conduit volume (168).

12. The calcined clay cooler (100) of one of the previous claims, **characterized in that** the calcined clay cooler (100) further comprises a support wheel (140), and **in that** the at least one channel wall (182) and the at least one conduit wall (162) extend through through-holes in the support wheel (140), wherein at least the at least one of the channel walls (182) and/or the conduit walls (162) is radially supported by the support wheel (140).

13. The calcined clay cooler (100) of claim 12, **characterized in that** the calcined clay cooler (100) comprises at least two support wheels (140), and **in that** a support wall (125) is attached to the at least two support wheels (140).

**Patentansprüche**

1. Kühler für kalzinierten Ton (100) mit einer Rotationsachse (102), wenigstens einer Tonleitung (160), einem Einlaufbereich (110) und einer Verbindungsschurre (105) wobei

- jede der wenigstens einen Tonleitungen (160) eine Tonleitungswandung (162) aufweist,
- jede der Tonleitungswandungen (162) ein Tonleitungsvolumen (168) umschließt,
- jedes der Tonleitungsvolumen (168) einen stromaufwärtigen Toneinlauf (161) und einen stromabwärtigen Tonauslauf (169) aufweist,
- jede der wenigstens einen Tonleitungen (160) drehbar abgestützt ist, um sich um die Rotationsachse (102) zu drehen,
- der Einlaufbereich (110) eine Einlaufschurre mit einem Einlass und einer Anzahl Auslässen aufweist, wobei die Anzahl der Auslässe der Anzahl der Tonleitungen entspricht und wobei die Auslässe jeweils mit dem Toneinlauf der zugehörigen Tonleitung verbunden sind,
- die Verbindungsschurre (105) ein Verbindungsschurrenende besitzt,
- das Verbindungsschurrenende sich in die Einlaufschurre hinein erstreckt

wobei

jede der Tonleitungswandungen (162) wenigstens einen Kühlmittelkanal (180) mit einer Kanalwandung (182) aufweist, welche ein Kanalvolumen (188) umschließt und einen Kanaleinlass und einen Kanalauslass definiert, **dadurch gekennzeichnet, dass**

- zwischen der Verbindungsschurre und der Einlaufschurre ein Ringspalt durch das sich in die Einlaufschurre hinein erstreckende Verbindungsschurrenende ausgebildet ist, und dadurch, dass
- der Ringspalt durch eine Dichtung abgedichtet ist und/oder wenigstens eine Fluidleitung wenigstens eine Düsenöffnung aufweist, welche dem Ringspalt zugewandt ist und/oder in dem Ringspalt und/oder in einer Umhüllung des Ringspalts endet.

2. Kühler für kalzinierten Ton (100) nach Anspruch 1, **dadurch gekennzeichnet, dass** die wenigstens eine Tonleitung (160) aus wenigstens zwei Tonleitungen (160), welche symmetrisch in Bezug auf die Rotationsachse (102) angeordnet sind, besteht und/oder diese aufweist.

3. Kühler für kalzinierten Ton (100) nach einem der vorhergehenden Ansprüche, **dadurch gekenn-**

9

**zeichnet, dass**
das Kühlmittelkanalvolumen (188) durch die Tonleitungswandung (162) und die Kühlmittelkanalwandung (182) begrenzt ist, wobei die Kanalwandung (182) wenigstens eine Teil der Tonleitungswandung (162) umschließt.

4. Kühler für kalzinierten Ton (100) nach dem vorhergehenden Anspruch,
**dadurch gekennzeichnet, dass**
die Kanalwandung (182) die Leitungswandung (162) radial und anti-radial und in axialer Richtung schwimmend abstützt.

5. Kühler für kalzinierten Ton (100) nach einem der vorhergehenden Ansprüche, **dadurch gekennzeichnet, dass**
er weiterhin wenigstens ein Stützprofil (200) aufweist, mit einem ersten Schenkel (210), einem mittleren Schenkel (230) und einem zweiten Schenkel (220), wobei

   - der mittlere Schenkel (230) sich zwischen dem ersten Schenkel (210) und dem zweiten Schenkel (220) befindet und einen Abstand zwischen dem ersten Schenkel (210) und dem zweiten Schenkel (220) bestimmt,
   - der erste Schenkel (210) an einer äußeren Oberfläche (164) der Leitungswandung (162) oder einer inneren Oberfläche (186) der Kanalwandung (182) befestigt ist und dass der zweite Schenkel (220) eine Gleitlagerfläche (228) aufweist, die die jeweils andere der äußeren Oberfläche (164) der Leitungswandung (162) oder inneren Oberfläche (186) der Kanalwandung (182) berührt, und
   - der Abstand radial in Bezug auf eine Längsachse einer durch die Leitungswandung (182) bestimmten Leitungsachse gemessen wird.

6. Kühler für kalzinierten Ton (100) nach dem vorhergehenden Anspruch,
**dadurch gekennzeichnet, dass**
wenigstens einer der wenigstens einen ersten Schenkel (210) durch Schweißen, Löten, Nieten oder Kleben an der Wandung (162, 182), mit der er verbunden ist, befestigt wird oder eine Einheit mit dieser bildet.

7. Kühler für kalzinierten Ton nach einem der vorhergehenden Ansprüche,
**dadurch gekennzeichnet, dass**
er weiterhin eine Kühlmittelleitung (190) aufweist, wobei die Kühlmittelleitung (190) sich entlang der Rotationsachse (102) erstreckt und/oder einen Anschluß der stromabwärtigen Hälfte des Kühlers für kalzinierten Ton (100) besitzt und/oder in fluider Verbindung mit dem stromaufwärtigen Ende des wenigstens einen Kühlmittelkanals (180) steht.

8. Kühler für kalzinierten Ton (100) nach einem der vorhergehenden Ansprüche, **dadurch gekennzeichnet, dass**
der Kühler für kalzinierten Ton (100) einen Kühlmittelkühler aufweist, mit einem Einlass für heißes Kühlmittel und einem Auslass für kaltes Kühlmittel, wobei der Kanaleinlass mit dem Auslass für kaltes Kühlmittel und der Kanalauslass mit dem Einlass für heißes Kühlmittel verbunden sind.

9. Kühler für kalzinierten Ton (100) nach dem vorhergehenden Anspruch
**dadurch gekennzeichnet, dass**
der Kühlmittelkühler einen Einlass für kaltes Wärmeträgerfluid und einen Auslass für heißes Wärmeträgerfluid aufweist und dass der Auslass für heißes Wärmeträgerfluid des Kühlmittelkühlers über eine Leitung für heißes Wärmeträgerfluid mit einem Wärmeeinlass einer Wärmesenke verbunden ist und dass der Einlass für kaltes Wärmeträgerfluid des Kühlmittelkühlers über eine Leitung für kaltes Wärmeträgerfluid mit einem Auslass für kaltes Wärmeträgerfluid der Wärmesenke verbunden ist.

10. Kühler für kalzinierten Ton (100) nach Anspruch 8 oder 9, **dadurch gekennzeichnet, dass**
der Auslass für kaltes Kühlmittel mit dem wenigstens einen Kanaleinlass über die Kühlmittelleitung (190) verbunden ist und/oder der Einlass für heißes Kühlmittel mit dem wenigstens einen Kanalauslass über die Kühlmittelleitung (190) verbunden ist.

11. Kühler für kalzinierten Ton (100) nach einem der vorhergehenden Ansprüche, **dadurch gekennzeichnet, dass**
die Tonleitung (160) Bewegungselemente und/oder Förderelemente aufweist, die sich von der inneren Oberfläche (166) der Leitungswandung (162) in das Leitungsvolumen (168) hinein erstrecken.

12. Kühler für kalzinierten Ton (100) nach einem der vorhergehenden Ansprüche, **dadurch gekennzeichnet, dass**
der Kühler für kalzinierten Ton (100) weiterhin eine Tragscheibe (140) aufweist, und dass die wenigstens eine Kanalwandung (182) und die wenigstens eine Leitungswandung (162) sich durch Durchgangslöcher in der Tragscheibe (140) erstrecken, wobei wenigstens die wenigstens eine der Kanalwandungen (182) und/oder der Leitungswandungen (162) radial durch die Tragscheibe (140) abgestützt wird.

13. Kühler für kalzinierten Ton (100) nach Anspruch 12, **dadurch gekennzeichnet, dass**
der Kühler für kalzinierten Ton (100) wenigstens zwei Tragscheiben (140) aufweist, und dass eine Tragwandung (125) mit den wenigstens zwei Tragscheiben (140) verbunden ist.

## Revendications

1. Refroidisseur d'argile calcinée (100) présentant un axe de rotation (102), au moins un conduit d'argile (160), une section d'entrée (110) et une goulotte de raccordement (105), dans lequel

    - chacun de l'au moins un conduit d'argile (160) comporte une paroi de conduit d'argile (162),
    - chacune des parois de conduit d'argile (162) renferme un volume de conduit d'argile (168),
    - chacun des volumes de conduit d'argile (168) comporte une entrée d'argile amont (161) et une sortie d'argile aval (169),
    - chacun de l'au moins un conduit d'argile (160) est supporté à rotation pour tourner par rapport à l'axe de rotation (102),
    - la section d'entrée (110) comprend une canalisation d'entrée avec une entrée de canalisation et un certain nombre de sorties de canalisation, dans lequel le nombre de sorties de canalisation correspond au nombre de conduits d'argile et dans lequel les sorties de canalisation sont chacune raccordées à l'entrée d'argile du conduit d'argile correspondant
    - la goulotte de raccordement (105) comporte une extrémité de goulotte de raccordement,
    - l'extrémité de goulotte de raccordement s'étend dans la canalisation d'entrée

    dans lequel

    chacune des parois de conduit d'argile (162) comprend au moins un canal de réfrigérant (180) présentant une paroi de canal (182) renfermant un volume de canal (188) et définissant une entrée de canal et une sortie de canal, **caractérisé en ce que**

        - un écartement en anneau est défini entre la goulotte de raccordement et la canalisation d'entrée par l'extrémité de goulotte de raccordement s'étendant dans la canalisation d'entrée et **en ce que**
        - l'écartement en anneau est scellé par un joint d'étanchéité et/ou au moins une ligne de fluide comporte au moins une ouverture de buse pointant vers l'écartement en anneau et/ou se terminant dans l'écartement en anneau et/ou dans une enceinte de l'écartement en anneau.

2. Refroidisseur d'argile calcinée (100) selon la revendication 1, **caractérisé en ce que** l'au moins un conduit d'argile (160) est et/ou comprend au moins deux conduits d'argile (160), qui sont agencés symétriquement par rapport à l'axe de rotation (102).

3. Refroidisseur d'argile calcinée (100) selon l'une des revendications précédentes, **caractérisé en ce que** le volume de canal de réfrigérant (188) est limité par la paroi de conduit d'argile (162) et par la paroi de canal de réfrigérant (182), dans lequel la paroi de canal (182) renferme au moins une portion de la paroi de conduit d'argile (162).

4. Refroidisseur d'argile calcinée (100) selon la revendication précédente, **caractérisé en ce que** la paroi de canal (182) supporte la paroi de conduit (162) radialement et anti-radialement et de manière flottante dans la direction axiale.

5. Refroidisseur d'argile calcinée (100) selon l'une des revendications précédentes, **caractérisé en ce qu'**il comprend en outre au moins un profilé de support (200) présentant une première branche (210), une branche de milieu (230) et une deuxième branche (220), dans lequel

        - la branche de milieu (230) est située entre la première branche (210) et la deuxième branche (220) et définit un décalage entre la première branche (210) et la deuxième branche (220),
        - la première branche (210) est fixée à une surface périphérique (164) de la paroi de conduit (162) ou à une surface interne (186) de la paroi de canal (182) et **en ce que** la deuxième branche (220) présente une surface de palier lisse (228) en contact avec l'autre respective parmi la surface périphérique (164) de la paroi de conduit (162) ou avec une surface interne (186) de la paroi de canal (182), et
        - le décalage est mesuré radialement par rapport à un axe longitudinal d'un axe de conduit défini par la paroi de conduit (182).

6. Refroidisseur d'argile calcinée (100) selon la revendication précédente, **caractérisé en ce qu'**au moins l'une de l'au moins un première branche (210) est fixée par soudage, brasage fort, rivetage, collage ou est d'un seul tenant avec la paroi (162, 182) à laquelle elle est fixée.

7. Refroidisseur d'argile calcinée selon l'une des revendications précédentes, **caractérisé en ce qu'**il comprend en outre une ligne de réfrigérant (190), dans lequel la ligne de réfrigérant (190) s'étend suivant l'axe de rotation (102) et/ou comporte un orifice de raccordement dans la moitié aval du refroidisseur d'argile calcinée (100) et/ou est fluidiquement raccordée à l'extrémité amont de l'au moins un canal de réfrigérant (180).

8.  Refroidisseur d'argile calcinée (100) selon l'une des revendications précédentes, **caractérisé en ce que** le refroidisseur d'argile calcinée (100) comprend un refroidisseur de réfrigérant avec une entrée de réfrigérant chaud et une sortie de réfrigérant froid, dans lequel l'entrée de canal est raccordée à la sortie de réfrigérant froid et la sortie de canal est raccordée à l'entrée de réfrigérant chaud.

9.  Refroidisseur d'argile calcinée (100) selon la revendication précédente, **caractérisé en ce que** le refroidisseur de réfrigérant comprend une entrée de fluide caloporteur froid et une sortie de fluide caloporteur chaud, et **en ce que** la sortie de fluide caloporteur chaud du refroidisseur de réfrigérant est raccordée à une entrée de chaleur d'un puits de chaleur par un conduit de fluide caloporteur chaud, et **en ce que** l'entrée de fluide caloporteur froid du refroidisseur de réfrigérant est raccordée à une sortie de fluide caloporteur froid du puits de chaleur via un conduit de fluide caloporteur froid.

10. Refroidisseur d'argile calcinée (100) selon la revendication 8 ou 9, **caractérisé en ce que** la sortie de fluide de refroidissement froid est raccordée à l'au moins un entrée de canal via la ligne de réfrigérant (190) et/ou **en ce que** l'entrée de fluide de refroidissement chaud est raccordée à l'au moins un sortie de canal via la ligne de réfrigérant (190).

11. Refroidisseur d'argile calcinée (100) selon l'une des revendications précédentes, **caractérisé en ce que** le conduit d'argile (160) comprend des moyens d'agitation et/ou des moyens de convoyage s'étendant depuis la surface interne (166) de la paroi de conduit (162) dans le volume de conduit (168).

12. Refroidisseur d'argile calcinée (100) selon l'une des revendications précédentes, **caractérisé en ce que** le refroidisseur d'argile calcinée (100) comprend en outre une roue de support (140), et **en ce que** l'au moins un paroi de canal (182) et l'au moins un paroi de conduit (162) s'étendent à travers des trous traversants dans la roue de support (140), dans lequel l'au moins un des parois de canal (182) et/ou des parois de conduit (162) est supportée radialement par la roue de support (140).

13. Refroidisseur d'argile calcinée (100) selon la revendication 12, **caractérisé en ce que** le refroidisseur d'argile calcinée (100) comprend au moins deux roues de support (140), et **en ce qu'**une paroi de support (125) est fixée aux au moins deux roues de support (140).

**Fig. 1**

**Fig. 2**

**Fig. 3**

**Fig. 4**

**Fig. 5**

Fig. 6

**Fig. 7**

**Fig. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 11530881 B2

### Non-patent literature cited in the description

- **RODRIGO FERNANDEZ ; FERNANDO MARTIRENA ; KAREN L. SCRIVENER**. The origin of the pozzolanic activity of calcined clay minerals: A comparison between kaolinite, illite and montmorillonite. *Cement and Concrete Research*, 2011, vol. 41, 113-122

- **TOBIAS DANNER**. Reactivity of Calcined Clays. PhD-Thesis, 2013
- **LUIZ FELIPE DE PINHO ; ROBERTO CAMPOS**. Claying it all on the line. *World Cement*, 2021, vol. 4, 35-38